(19) Europäisches Patentamt
European Patent Office
Office européen des brevets

(11) **EP 2 962 767 B1**

(12) **EUROPÄISCHE PATENTSCHRIFT**

(45) Veröffentlichungstag und Bekanntmachung des Hinweises auf die Patenterteilung:
**12.04.2017   Patentblatt 2017/15**

(21) Anmeldenummer: **14002232.8**

(22) Anmeldetag: **30.06.2014**

(51) Int Cl.:
***B05B 12/08*** *(2006.01)*

(54) **System und Verfahren zur Ermittlung von Prozessparametern für die roboterbasierte Spritzapplikation von viskosen Fluiden**

System and method for determining process parameters for the robotic spray application of viscous fluids

Système et procédé de détermination de paramètres de processus pour l'application par pulvérisation robotisée de fluides visqueux

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(43) Veröffentlichungstag der Anmeldung:
**06.01.2016   Patentblatt 2016/01**

(73) Patentinhaber: **ABB Schweiz AG**
**5400 Baden (CH)**

(72) Erfinder:
• **Hofschulte, Jens**
**61381 Friedrichsdorf (DE)**
• **Ott, Jürgen**
**30827 Grabsen (DE)**

(74) Vertreter: **Marks, Frank et al**
**ABB AG**
**GF-IP**
**Wallstadter Strasse 59**
**68526 Ladenburg (DE)**

(56) Entgegenhaltungen:
**US-A1- 2006 081 039     US-A1- 2007 231 427
US-A1- 2009 087 541**

**Beschreibung**

Die Erfindung betrifft ein System zur Ermittlung von Prozessparametern für die Spritzapplikation von viskosen Fluiden, umfassend ein mittels Vorgabe von Eingangsparametern ansteuerbares Applikationssystem für ein viskoses Fluid mit wenigstens den Komponenten Dosiervorrichtung, Fluidventil und Applikatonsdüse, wobei das dynamische Verhalten des Applikationssystems hinsichtlich des Volumenstromverlaufs des viskosen Fluids beim Applizieren unter anderem auch von vorgebbaren regelungstechnischen Prozessparametern abhängig ist.

Es ist allgemein bekannt, dass in der industriellen Produktion in vielen Bereichen eine Spritzapplikation von viskosen oder hochviskosen Fluiden zum Einsatz kommt, beispielsweise in der Automobilindustrie bei der Applikation von Dämmmatten oder zum Nahtabdichten. Aber auch die Applikation von Klebstoffen ist ein gängiges Einsatzgebiet für die Spritzapplikation.

Ein entsprechendes Applikationssystem umfasst typischerweise eine Dosiervorrichtung, eine Schlauchverbindung, eine Applikationsdüse sowie ein Fluidventil in strömungstechnischer Nähe zur Applikationsdüse. Mit letzterem kann der von den genannten Komponenten gebildete Fluidkanal zwischen Dosiervorrichtung und Applikationsdüse gezielt unterbrochen werden, um so beispielsweise ein Tropfen des Fluids aus der Applikationsdüse bei abgeschalteter Dosiervorrichtung zu unterbinden. Dies bedingt eine Koordination des An- beziehungsweise Abschaltens von Dosiervorrichtung und Fluidventil, um beispielsweise zu vermeiden, dass der Dosierer angeschaltet wird, während das Fluidventil noch geschlossen ist. Dies kann zu einem unzulässig hohen Druckanstieg führen.

Aufgrund der hohen Viskosität des zu applizierenden Materials muss dessen Applikation unter hohem Druck erfolgen, beispielsweise unter Verwendung eines Dosierzylinders mit Servoantrieb. Dem Fachmann sind jedoch weitere Ausführungsformen von Dosiervorrichtungen bekannt, beispielsweise Zahnradpumpen oder Schneckenpumpen, wobei auch hier als Antrieb häufig ein Servomotor dient. Die Schlauchverbindung zwischen Dosierzylinder und Applikationsdüse ist als Hochdruckschlauch auszulegen. Ein Applikationssystem weist daher ein dynamisches Verhalten auf, welches von vielen Faktoren abhängig ist, beispielsweise der Dehnbarkeit des Schlauches, den rotatorischen Massen des Antriebs der Dosiervorrichtung sowie Verzugszeiten, insbesondere beim Ein- oder Ausschalten der Dosiervorrichtung oder dem Ein- oder Ausschalten des Fluidventils. Aber auch die Art des zu applizierenden viskosen Fluids als solches hat einen Einfluss auf das dynamische Verhalten eines Applikationssystems, wobei auch schon Chargenschwankungen des viskosen Fluids einen Einfluss auf das dynamische Verhalten haben können.

Die abschließende geometrische Form des unter hohem Druck durch eine Applikationsdüse auf die Oberfläche eines Objektes applizierten viskosen Materials ist abhängig von der Breite und Homogenität des Spritzstrahls, der Geschwindigkeit, mit welcher die Applikationsdüse über die Oberfläche des zu applizierenden Objektes bewegt wird, beispielsweise mittels eines Roboters, sowie dem jeweiligen Volumenstrom durch die Applikationsdüse. Aufgrund einer typischerweise linearen Bewegung der Applikationsdüse wird das viskose Material prinzipiell in einer streifenähnlichen Form auf der Oberfläche eines Objektes appliziert.

Üblicherweise sind eine möglichst homogene Schichtdicke und eine konstante Breite des applizierten Materialstreifens erwünscht, wobei dessen Breite in hohem Maße von dem Volumenstrom des Fluids durch den Fluidkanal des Applikationssystems während des Applizierens abhängig ist. Aufgrund der bereits erwähnten hohen Dynamik eines derartigen Applikationssystems ist jedoch gerade der Volumenstrom nach einer Änderung der Eingangsparameter des Applikationssystems gewissen dynamischen Schwankungen unterworfen, die auch zu einer bereichsweisen Abweichung der tatsächlich applizierten Streifenbreite von der gewünschten Streifenbreite führt.

Um das dynamische Verhalten eines Applikationssystems zu verbessern, werden dessen Eingangsparameter wie beispielsweise Drehzahlvorgabe des Antriebs, vor deren Anwendung zumeist einer Vorverarbeitungsstufe wie einem Filter zugeführt und dadurch angepasst. Bei entsprechender Wahl der Prozessparameter der Vorverarbeitungsstufe, beziehungsweise der Filterparameter kann das dynamische Verhalten eines Applikationssystems entscheidend verbessert werden.

Das Patentdokument US 2007 / 231427 A1 offenbart eine Vorrichtung zur Applikation einer geschmolzenen gummiähnlichen Masse. Eine Verteilvorrichtung sprüht Partikel einer geschmolzenen Gummimasse auf ein essbares Substrat, wobei die Masse dann erstarrt. Eine Kontrollvorrichtung ist dafür vorgesehen, den Applikationsprozess und die Applikationsparameter unter anderem auch anhand einer Gewichtsmessung zu überwachen.

Als nachteilig erweist sich hierbei, dass sich eine messtechnisch basierte Ermittlung derartiger Prozessparameter als sehr aufwändig und Fehler behaftet erweist. Bekannte Durchflussmesser müssen zur Messung des Volumenstroms in den Fluidkanal integriert werden und beeinflussen damit in nachteiliger Weise dessen dynamisches Verhalten, so dass auf einer derartigen Messung beruhende ermittelte Prozessparameter ungenau sind. Eine weitere Variante der Schätzung derartiger Prozessparameter beziehungsweise deren empirische Bestimmung erweist sich als sehr zeitaufwändig und ebenfalls ungenau.

Ausgehend von diesem Stand der Technik ist es Aufgabe der Erfindung, ein System und ein Verfahren bereitzustellen, welches eine gezielte Bestimmung der Prozessparameter einer Vorverarbeitungsstufe erlaubt, ohne dabei durch eine Volumenstrommessung das dynamische Verhalten des jeweiligen Applikationssystems zu verfälschen.

Diese Aufgabe wird gelöst durch ein System wie im Anspruch 1 beschrieben.

Die Grundidee der Erfindung besteht darin, für die Prozessparameterbestimmung eine Volumenstrommessung anhand eines Gewichtsverlaufes des auf ein Aufprallobjekt applizierten viskosen Fluids durchzuführen, womit eine Verfälschung des dynamischen Verhaltens des Applikationssystems in vorteilhafter Weise vermieden ist. Die verwendete Volumenstrommessung ist eine indirekte Messung, mittels welcher zunächst kontinuierlich das Gewicht des auf ein Aufprallobjekt applizierten viskosen Fluids ermittelt wird. Anhand der Gewichtszunahme des Aufprallobjektes, auf welchem das viskose Fluid appliziert wird, lässt sich anhand der spezifischen Dichte des viskosen Fluids eine Volumenzunahme des applizierten Fluids pro Zeiteinheit bestimmen. Betrachtet man die Volumenzunahme über entsprechend kleine Abtastzeiträume von beispielsweise 2ms, lässt sich hieraus ein entsprechender Volumenstrom errechnen, wobei durch Einsatz von Digitalfiltern etwaige stochastische Schwankungen in der jeweiligen Messung reduzieren lassen.

Die Messung des Gewichtes des applizierten Fluids erfolgt also erst, nachdem das Fluid das Applikationssystem verlassen hat. Eine Beeinflussung des dynamischen Verhaltens des Applikationssystems ist damit ausgeschlossen.

Durch den ermittelten Volumenstrom ist es möglich, für die jeweils anliegenden Eingangsparameter - beispielsweise eine vorgegebene Drehzahl - das reale Verhalten des Applikationssystems zu bestimmen. Im stationären Fall, also bei konstanten Eingangsparametern, entspricht - wenn das Applikationssystem korrekt kalibriert ist - der indirekt durch die Eingangsparameter vorgegebene Volumenstrom dem tatsächlichen Volumenstrom. Wenn beispielsweise ein Kolbendosierer mit Servoantrieb verwendet wird, dann entspricht jeder Umdrehung der Spindel ein bestimmtes Volumen, welches appliziert wird. In diesem Fall wäre dann ein Eingangsparameter zum Erzielen eines gewünschten Volumenstroms eine Drehzahlvorgabe für den Spindelantrieb.

Wenn jedoch eine zeitliche Sequenz veränderter Eingangsparameter vorgegeben wird, dann resultiert aufgrund des dynamischen Verhaltens des Applikationssystems nach jeder Änderung der Eingangsparameter ein entsprechendes Einschwingen des Volumenstromes als Antwort des Applikationssystems. Anhand der Zuordnung der Eingangsparameteränderung, durch welche das System angeregt wird, und der jeweiligen Sprungantwort lässt sich entsprechend bekannter regelungstechnischer Vorgehensweisen eine Übertragungsfunktion identifizieren, durch welche der Zusammenhang zwischen Eingangsparametern und Volumenstrom darstellbar ist.

Ein geeignetes Übertragungsfunktionsmodell ist beispielsweise ein Übertragungsfunktionspolynom:

$$F(z) = \frac{y(z)}{u(z)} = \frac{b_0 z^m + b_1 z^{m-1} + \ldots + b_{m-1} z + b_m}{z^n + a_1 z^{n-1} + \ldots + a_{n-1} z + a_n}$$

Eine Schätzung der Parameter des Übertragungsfunktionsmodells kann nach einer Vielzahl dem Fachmann bekannter Methoden erfolgen, beispielsweise durch Übertragung des Übertragungsfunktionsmodells in den Zeitbereich und Lösung von entsprechenden Differenzgleichungen, dem Gauß-Newton Schätzverfahren, der Anwendung von Markovparametern oder der *Prediction Error Method* (PEM). Je mehr Messwerte von verschiedenen dynamischen Einschwingvorgängen vorliegen, desto präziser kann die Übertragungsfunktion approximiert werden. Nach entsprechender Ermittlung der Parameter des Übertragungsfunktionsmodells ist somit eine geeignete Übertragungsfunktion zur Verfügung gestellt, welche das Verhalten des Applikationssystems mit einer hohen Genauigkeit nachbildet.

Unter Kenntnis einer geeigneten mathematischen Übertragungsfunktion ist es möglich, die Prozessparameter für die Vorverarbeitungsstufe, die sogenannten Shoot-Parameter, zu ermitteln, durch welche der zeitliche Verlauf der Vorgaben der Eingangsparameter für das Applikationssystem derart angepasst wird, dass unerwünschten dynamischen Ausgleichsvorgängen während des Einschwingvorgangs nach einer Parameteränderung entgegengewirkt wird. Somit ist in vorteilhafter Weise eine verbesserte Steuerung des Applikationssystems ermöglicht.

Die Shoot-Parameter sind die Prozessparameter der reglungstechnischen Vorverarbeitungsstufe für die Eingangsparameter des Applikationssystems. Eine Vorverarbeitungsstufe kann insbesondere durch einen (digitalen) Filter gebildet sein. Zur Ermittlung der Shoot-Parameter werden ein "idealer" dynamischer Volumenstromverlauf sowie die entsprechenden Eingangsparameter vorgegeben, wobei die Shoot-Parameter derart angepasst werden, dass der durch die Übertragungsfunktion ermittelte zugehörige dynamische Volumenstromverlauf dem "idealen" Verlauf möglichst nahe kommt. Dies kann im einfachsten Fall auf eine empirische Art und Weise erfolgen, wobei der Ablauf hierfür jedoch idealerweise automatisiert ist, beispielsweise mit Hilfe eines entsprechenden Programmproduktes, welches auf der Rechenvorrichtung installiert ist. Aber beispielsweise auch anhand einer Invertierung der Übertragungsfunktion lassen sich die Shoot-Parameter gezielt ermitteln.

Die Rechenvorrichtung kann im einfachsten Fall ein Personal Computer sein, es ist aber auch ebenso gut möglich, zumindest einen Teil der von der Rechenvorrichtung zu erledigenden Aufgaben einem Robotercontroller zu übertragen, welcher für die Steuerung eines in das erfindungsgemäße System integrierten Roboters zuständig ist. Dies bietet insbesondere den Vorteil, dass die Bewegung des Roboters und die Steuerung des Applikationssystems zeitlich zueinander koordiniert durch die selbe Rechenvorrichtung beziehungsweise den Robotercontroller durchführen zu lassen. Im Idealfall lässt sich eine zusätzliche Rechenvorrichtung völlig vermeiden, indem alle zu erledigenden Aufgaben durch den Robotercontroller durchgeführt werden. Gemäß einer besonders bevorzugten Ausgestaltungsform des erfindungsgemäßen Systems ist das Aufprallobjekt eine senkrecht ausgerichtete Platte. Hierdurch führen nämlich etwaige Pralleffekte des in diesem Fall horizontal auf die Aufprallplatte auftreffenden viskosen Fluids nicht zu einer Verfälschung des Messergebnisses, welches auf einer Bestimmung der senkrecht wirkenden Gewichtskraft beruht. Würde im anderen Extremfall das viskose Fluid senkrecht auf eine horizontale Aufprallplatte appliziert werden, wäre dem ermittelten Gewichtsverlauf noch in nachteiliger Weise ein Prallimpulsverlauf des auftreffenden Fluids überlagert. Idealerweise ist in dieser Ausführungsform die Applikationsdüse derart ausgerichtet, dass der aus ihr applizierte Fluidstrahl zumindest annähernd waagerecht aus dieser austritt.

Entsprechend einer bevorzugten Ausgestaltungsform des erfindungsgemäßen Systems umfasst die Waage einen Biegebalken, welcher als Gewichtssensor dient. Insbesondere bei senkrechter Anordnung einer Platte als Aufprallobjekt und waagerechter Anordnung des Biegebalkens werden eventuelle horizontal ausgerichtete Prallimpulse über den Biegebalken abgetragen, ohne dass dadurch eine Messung der senkrecht wirkenden Gewichtskraft beeinträchtigt wäre.

Einer weiteren Erfindungsvariante folgend ist Waage dafür vorgesehen, mit einer Frequenz von 100Hz oder höher Messdaten bereitzustellen. Je genauer beziehungsweise höherfrequenter der zeitliche Gewichtsverlauf erfasst und bereitgestellt wird, umso genauer lässt sich der Volumenstromverlauf ermitteln. Auch der Einsatz von Digitalfiltern und damit eine Korrektur möglicher stochastischer Messfehler sowie eventueller Eigendynamiken der Waage werden durch eine höhere Abtastfrequenz in sinnvoller Weise ermöglicht.

Entsprechend einer weiteren vorteilhaften Ausgestaltungsvariante des erfindungsgemäßen Systems ist zumindest die Applikatonsdüse des Applikationssystems auf einem Industrieroboter angeordnet. Die Verwendung eines Industrieroboters erlaubt in vorteilhafter Weise eine kontrolliert gesteuerte Bewegung der Applikationsdüse relativ zum Aufprallobjekt, wobei idealerweise zumindest einige der von der Rechenvorrichtung zu erledigenden Arbeitsschritte dafür vorgesehen sind, von einem zugehörigen Robotercontroller des Industrieroboters ausgeführt zu werden.

Die erfindungsgemäße Aufgabe wird auch gelöst durch ein Verfahren zur Ermittlung und Anwendung von Prozessparametern für die Spritzapplikation von viskosen Fluiden mit einem erfindungsgemäßen System, umfassend folgende Schritte

- Bereitstellen eines Übertragungsfunktionsmodells zur Nachbildung des dynamischen Verhaltens des Applikationssystems,
- Ansteuerung des Applikationssystems gemäß einer Sequenz veränderter Eingangsparameter, wobei eine Applikation eines viskosen Fluids auf das Aufprallobjekt erfolgt,
- kontinuierliche Gewichtsbestimmung des Aufprallobjektes inklusive des auf dieser applizierten viskosen Fluids,
- kontinuierliche Ermittlung des Volumenstromverlaufes des applizierten Fluids anhand der Gewichtszunahme in Abhängigkeit der Zeit,
- Bestimmung geeigneter Parameter für das Übertragungsfunktionsmodell anhand wenigstens der vorgegebenen Eingangsparameter als Eingangsgrößen und des zugehörigen Volumenstromverlaufs als Ausgangsgröße, so dass eine Übertragungsfunktion definiert ist,
- Vorgabe eines gewünschten dynamischen Volumenstromverlaufs,
- Ermittlung von hinsichtlich wenigstens eines vorgebbaren Optimierungskriteriums regelungstechnisch optimierten Prozessparametern anhand der Übertragungsfunktion und des gewünschten dynamischen Volumenstromverlaufs,
- Übertragung der ermittelten Prozessparameter in dieses oder ein baugleiches ansteuerbares Applikationssystem.

Der Volumenstrom bestimmt in hohem Maße das Erscheinungsbild des applizierten Fluids. Bei linearer Bewegung der Applikationsdüse längs eines zu applizierenden Objektes ergibt sich daraus ein Fluidstreifen. Je nach Anwendungsfall können verschiedene Formen des Fluidstreifens gewünscht sein, beispielsweise mit einer rechteckförmigen oder rampenähnlichen Grundfläche. Unter Umständen kann auch ein bestimmtes Höhenprofil gefordert sein. Je nach gewünschter Form des Fluidstreifens ergibt sich also ein erforderlicher Volumenstromverlauf. Um diesen erforderlichen Volumenstromverlauf möglichst gut zu erreichen, wird dieser für die Ermittlung der geeigneten Prozessparameter als gewünschter dynamischer Volumenstromverlauf vorgegeben.

Die entsprechende Funktionsweise und die Vorteile dieses Verfahrens wurden schon zuvor erläutert. Als Optimierungskriterium für die Ermittlung der Prozessparameter für die Vorverarbeitungsstufe kommen beispielsweise die aus der Reglungstechnik bekannten Kriterien wie maximale Steilheit des Anstiegs der Ausgangsgröße beziehungsweise des Volumenstroms nach einer Änderung der Eingangsparameter, maximales Überschwingen, maximales Unterschwingen oder dergleichen in Frage.

Nach Übertragung der so ermittelten Prozessparameter in dieses oder ein baugleiches Applikationssystem - beziehungsweise einer Vorverarbeitungsstufe für dessen Eingangsparameter - wird unter Verwendung dieser Prozessparameter das dynamische Verhalten dieses Systems beim Applizieren von viskosem Fluid unter Produktionsbedingungen in vorteilhafter Weise verbessert. Es sei an dieser Stelle noch erwähnt, dass die ermittelten Prozessparameter für ein Applikationssystem genau für die Verwendung des gleichen viskosen Fluids und unter gleichen Randbedingungen wie beispielsweise Temperatur und Spritzabstand gelten, da sich die tihxotropischen Eigenschaften verschiedener viskoser Fluide in hohem Maße voneinander unterscheiden können.

Die erfindungsgemäße Aufgabe wird auch gelöst durch ein Verfahren zur Regelung der Spritzapplikation eines mittels Vorgabe von Eingangsparametern ansteuerbaren Applikationssystems für ein viskoses Fluid mit wenigstens den Komponenten Dosiervorrichtung, Fluidventil und Applikatonsdüse, gekennzeichnet durch folgende Schritte:

- Bereitstellen einer Übertragungsfunktion zur Nachbildung des dynamischen Verhaltens des Applikationssystems, wobei die Übertragungsfunktion die vorgegebenen Eingangsparameter als Eingangsgrößen und den zugehörigen Volumenstromverlauf als Ausgangsgröße umfasst,
- Applikation eines viskosen Fluids durch das Applikationssystem unter Vorgabe von Eingangsparametern und einem zugehörigen zu erzielenden idealen Volumenstromverlauf,
- kontinuierliches Schätzen des realen Volumenstromverlaufs mittels wenigstens der Übertragungsfunktion,
- Regelung der Eingangsparameter derart, dass während der Applikation der geschätzte Volumenstromverlauf dem zu erzielenden idealen Volumenstromverlauf möglichst nahe kommt.

Erfindungsgemäß ist gemäß dieser Variante keine Steuerung sondern eine Regelung des Volumenstroms vorgesehen. Hierdurch erschließen sich die dem Fachmann geläufigen Vorteile, welche eine Regelung gegenüber einer Steuerung aufweist. Um auf der einen Seite die benötigte Regelgröße, den Volumenstrom, bereitzustellen und auf der anderen Seite eine negative Beeinflussung des Applikationssystems durch einen Volumenstrommessers zu vermeiden, wird der Volumenstromverlauf erfindungsgemäß nicht gemessen, sondern mit Hilfe einer Übertragungsfunktion geschätzt. Somit ist nicht das Applikationssystem selber, sondern eine das dynamische Verhalten des Übertragungssystems beschreibende Funktion in einen Regelkreislauf eingebunden.

Weitere vorteilhafte Ausgestaltungsmöglichkeiten sind den weiteren abhängigen Ansprüchen zu entnehmen.

Anhand der in den Zeichnungen dargestellten Ausführungsbeispiele sollen die Erfindung, weitere Ausführungsformen und weitere Vorteile näher beschrieben werden.

Es zeigen:

Fig. 1   ein exemplarisches System zur Ermittlung von Prozessparametern,
Fig. 2   einen Teil eines exemplarischen Systems zur Ermittlung von Prozessparametern,
Fig. 3   ein exemplarisches Applikationsergebnis bei variierendem Volumenstromverlauf,
Fig. 4   ein exemplarisches Regelschema mit Übertragungsfunktion,
Fig. 5   ein exemplarisches Steuerschema mit Shootfilter sowie
Fig. 6   einen exemplarischer Gewichtsverlauf und einen zugehörigen Volumenstromverlauf.

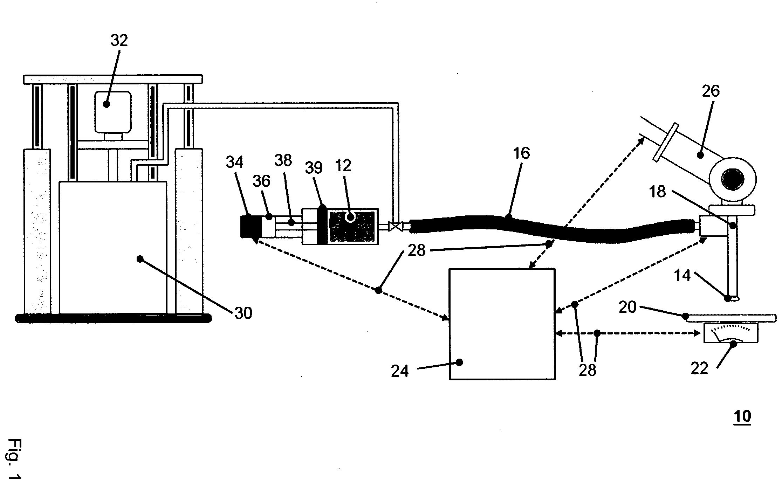

Fig. 1 zeigt ein exemplarisches System zur Ermittlung von Prozessparametern in einer schematischen Darstellung 10. Eine Dosiervorrichtung 12, umfassend einen Dosierantrieb 34, ein Getriebe 36 sowie eine Spindel 38, ist dafür vorgesehen, ein viskoses Fluid mit einem vorgegebenen Volumenstrom aus einem Dosierzylinder 39 zu drücken. Der Volumenstrom ergibt sich letztendlich aus der Drehzahl des Dosierantriebs 34, wobei anhand der geometrischen Randbedingungen jeder Umdrehung ein bestimmtes Volumen zugeordnet werden kann. Eine Vorgabe eines gewünschten Volumenstroms erfolgt in diesem Fall durch den Eingangsparameter Drehzahl des Dosierantriebs 34.

Das aus einer Auslassöffnung des Dosierzylinders 39 strömende viskose Fluid wird über einen Hochdruckschlauch 16 einer Applikationsdüse 14 zugeführt, wobei strömungstechnisch kurz vor der Applikationsdüse 14 ein Fluidventil 18 vorgesehen ist, durch welches der von den zuvor genannten Komponenten gebildete Fluidkanal abgesperrt werden kann. Die Applikationsdüse 14 ist am distalen Ende des Armes eines Industrieroboters 26 angeordnet, welcher beispielsweise über 6 Bewegungsfreiheitsgrade verfügt und eine Armlänge von 2,5m aufweist. Hierdurch ist eine gesteuerte Bewegung der Applikationsdüse 14 entlang der Oberfläche eines zu applizierenden Objektes ermöglicht, wobei ein Spritzabstand von beispielsweise 10mm - 20mm eingehalten wird.

In diesem Beispiel erfolgt eine Applikation des viskosen Fluids jedoch auf ein Aufprallobjekt 20, in diesem Fall eine leichtgewichtige, steife Platte, welche unterhalb der Applikationsdüse 14 angeordnet ist. Das Aufprallobjekt 20 ist auf einer Waage 22 angeordnet, welche dafür vorgesehen ist, kontinuierlich das Gewicht der Aufprallplatte 20 zuzüglich des auf ihr applizierten viskosen Fluids mittels einer Kommunikationsleitung 28 an eine Rechenvorrichtung 24 zu übertragen. Die Rechenvorrichtung 24 ist in diesem Beispiel ein Robotercontroller, welcher für die Steuerung des Industrieroboters 26 und der Dosiervorrichtung 12 vorgesehen ist.

Ebenso ist in der Rechenvorrichtung ein Digitalfilter vorgesehen, welcher als Vorverarbeitungsvorrichtung beziehungsweise Shoot-Filter für die Eingangsparameter des Applikationssystems dient und welcher vorzugsweise als Teil eines Softwareprogrammproduktes realisiert ist, welches auf der Rechenvorrichtung installiert ist. Durch geeignete Wahl der Prozessparameter des Shoot-Filters werden die Eingangsparameter des Applikationssystems derart angepasst, dass das dynamische Verhalten des Applikationssystems verbessert wird, das heißt der tatsächlich an der Applikationsdüse austretende Volumenstrom auch bei Änderung der Eingangsparameter der aus den Eingangsparametern resultierenden Sollvorgabe des Volumenstroms möglichst nahe kommt.

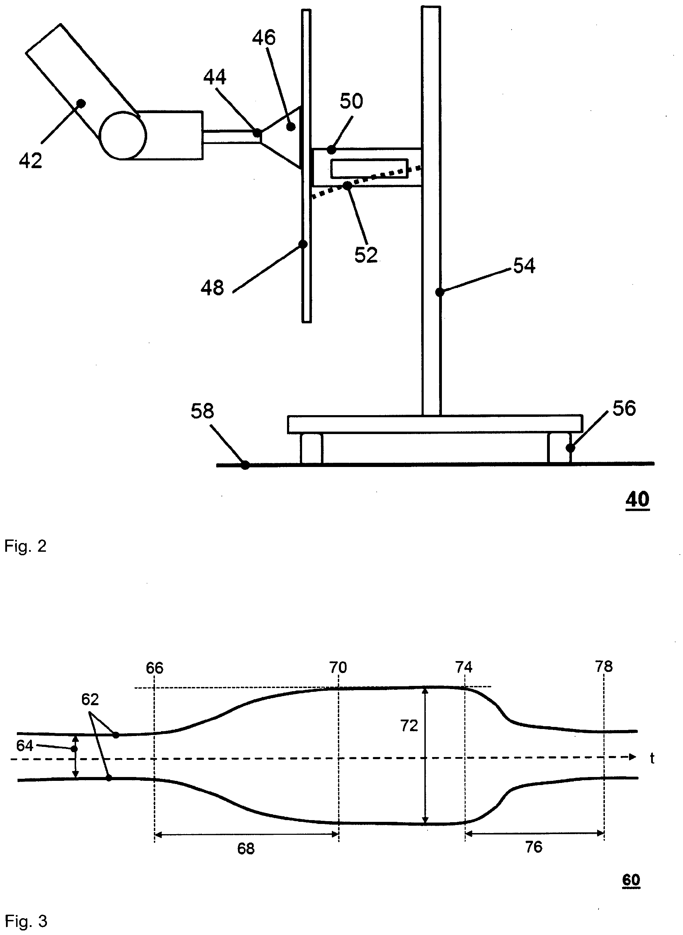

Die Fig. 2 zeigt einen Teil eines exemplarischen Systems zur Ermittlung von Prozessparametern in einer schematischen Darstellung 40. Eine Applikationsdüse 44 ist an dem distalen Ende eines Industrieroboters 42 angeordnet, wobei ein horizontal austretender Fluidstrahl 46 auf eine Applikationsobjekt 48, in diesem Fall eine senkrecht ausgerichtete Platte, gerichtet ist. Das Gewicht des Applikationsobjektes 48 zuzüglich des auf diesem applizierten viskosen Fluids wird mittels eines Biegebalkens 50 ermittelt, wobei dieser mit einer gestrichelten Line 52 in gebogenem Zustand angedeutet ist. Die Verwendung von Biegebalken 50 als Messsensor ist dem Fachmann bekannt.

Die senkrechte Anordnung des Aufprallobjektes 48 beziehungsweise der Platte ist mit Vorteilen verbunden, weil so ein durch den auftreffenden Fluidstrahl 46 bedingter waagerechter Aufprallimpuls nicht zu einer Verfälschung der durch den Biegebalken 50 erfassten senkrecht wirkenden Gewichtskraft führt. Der Biegebalken 48 ist an seinem anderen Ende mit einem Tragegestell 54 verbunden, welches seinerseits gegenüber einer Standfläche 58 auf Vibrationsdämpfern 56 angeordnet ist, wodurch eine negative Beeinflussung der Qualität der Gewichtsbestimmung mittels des Biegebalkens 50 durch ungewünschte Vibrationen in vorteilhafter Weise reduziert ist.

Die Figur 3 zeigt ein exemplarisches Applikationsergebnis bei variierendem Volumenstromverlauf in einer Skizze 60. Mit der Bezugsziffer 62 ist ein Fluidstrahlbreitenverlauf einer mit einer homogenen Geschwindigkeit über eine Platte bewegten Applikationsdüse dargestellt. Die Breite des Fluidstrahlverlaufs 62 kann zumindest in diesem Beispiel vereinfacht als proportional zu einem korrespondierenden Volumenstromverlauf angesehen werden. Vor einem ersten Schaltzeitpunkt 66 ist die Fluidstrahlbreite beziehungsweise der zugehörige Volumenstrom mit einem Pfeil 64 angedeutet. Nach dem ersten Schaltzeitpunkt 66 werden die Eingangsparameter des Applikationssystems derart geändert, dass sich eine erhöhte Fluidstrahlbreite beziehungsweise ein erhöhter Volumenstrom 72 ergibt.

Aufgrund des dynamischen Verhaltens des Applikationssystems erfolgt eine stabile Erhöhung der Fluidstrahlbreite auf den gewünschten Wert nicht unmittelbar, sondern erst nach einem Übergangszeitraum 68. Während dieses Übergangszeitraums 68 erfolgt eine Art Einschwingverhalten, welches durch Prozessparameter einer Vorverarbeitungsvorrichtung beziehungsweise einem Shoot-Filter beeinflusst werden kann. Je nach Optimierungskriterien, unter Berücksichtigung derer die Prozessparameter bestimmt wurden, ergibt sich eine asymptotische Annäherung an den zu erreichenden Wert oder es kommt auch zu einem steileren Anstieg mit entsprechenden Überschwingern.

Zu einem zweiten Schaltzeitpunkt 74 wird die Sollvorgabe für die Fluidstrahlbreite beziehungsweise den Volumenstrom wieder reduziert, wobei sich auch hier erst nach einem Übergangszeitraum 76 ab einem Zeitpunkt 78 ein stationärer Zustand anschließt.

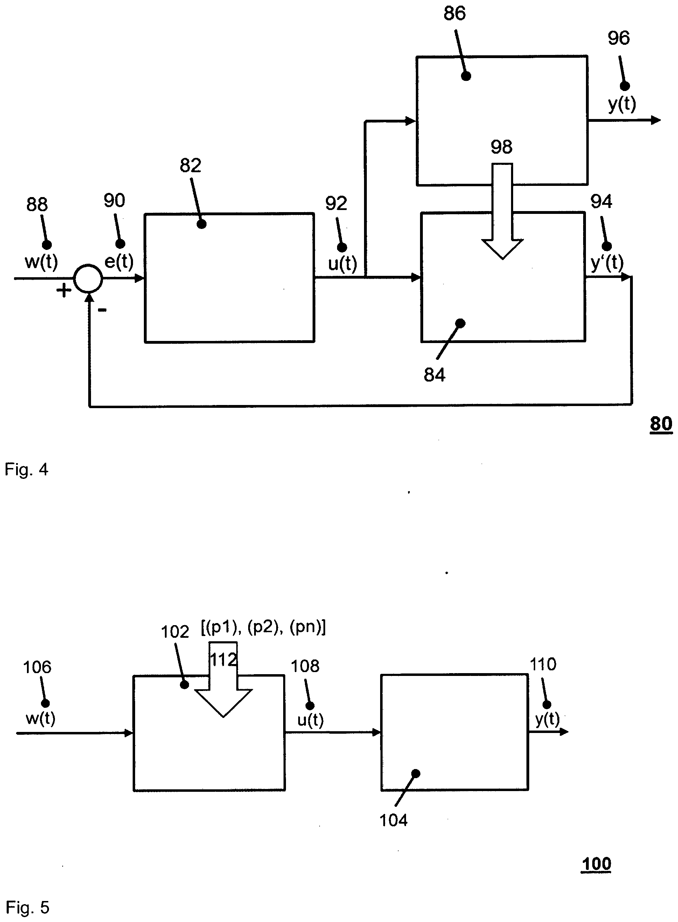

Die Figur 4 zeigt ein exemplarisches Regelschema mit Übertragungsfunktion in einer Darstellung 80. Wie bei einem bekannten Regelschema ist ein Regler 82 vorgesehen, dem als Regelgröße die Abweichung einer Istgröße 94 von einer Sollgröße 88 zugeführt ist, wobei beide Größen den Volumenstrom beschreiben. Als Ausgangsgröße des Reglers 82 wird eine Stellgröße 92, beispielsweise die Drehzahlvorgabe für den Antrieb einer Dosiervorrichtung, bereitgestellt und einem Applikationssystem 86 zugeführt und dort angewendet, so dass sich eine reale Istgröße 96 für den Volumenstrom ergibt.

In einem bekannten Regelkreislauf müsste diese reale Istgröße dem Regler 82 in Form einer Abweichung zur Sollgrößenvorgabe 88 zugeführt werden. Eine reale messtechnische Ermittlung dieser Größe ist im Produktionseinsatz des Applikationssystems jedoch nicht möglich ohne das dynamische Verhalten des Applikationssystems negativ zu beeinflussen. Deshalb ist erfindungsgemäß vorgesehen, anstelle einer realen Messung der Istgröße für den Volumenstrom eine Schätzung des Volumenstromes durch eine Übertragungsfunktion 84 vorzusehen, und den Schätzwert 94 als Istwert für die Differenzenbildung vorzusehen. Optional werden der Übertragungsfunktion bekannte Messgrößen 98 aus dem Applikationssystem 86 zur Verfügung gestellt. Die Genauigkeit der Schätzung wird dadurch in vorteilhafter Weise erhöht.

Die Figur 5 zeigt ein exemplarisches Steuerschema mit Shootfilter 102 in einer Darstellung 100. Dem Shootfilter 102, dessen Verhalten von den Prozessparametern 112 abhängig ist, wird in Form von Sollgrößenvorgaben 106 für den Volumenstrom, beispielsweise einer Drehzahlvorgabe für den Antrieb einer Dosiereinheit, ein gewünschter Volumenstromverlauf bereitgestellt. Nach Anpassung der Sollgrößenvorgabe 106 durch den Shoot-Filter 102 ergeben sich die Eingangsparameter 108 für ein Applikationssystem 104, welches dann während der Applikation eine reale Istgröße 110, einen Volumenstrom, ausgibt. Durch die Anwendung des Shoot-Filters 102 werden die Eingangsparameter für das Applikationssystem 104 derart angepasst, dass sein dynamisches Verhalten verbessert ist.

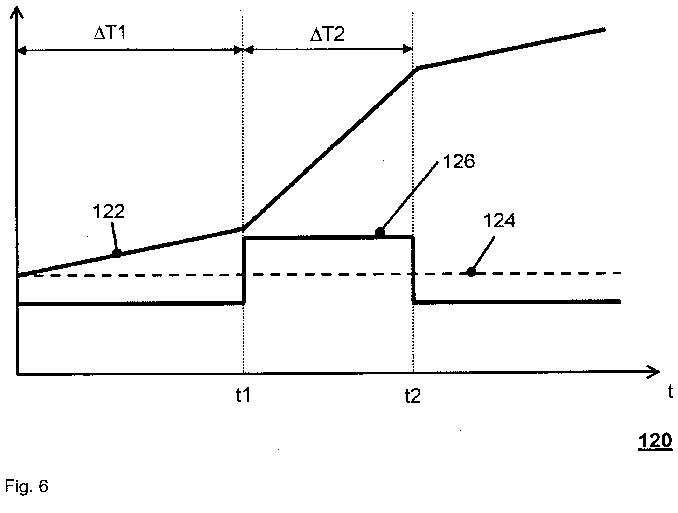

Die Figur 6 zeigt einen exemplarischer Gewichtsverlauf und einen zugehörigen Volumenstromverlauf in einer Darstellung 120. Ein Gewichtsverlauf eines Aufprallobjektes während einer Applikation mit einem viskosen Fluid ist mit der Bezugsziffer 122 angedeutet. Das zu Beginn der Applikation entspricht das erfasste Gewicht dem (Leer)gewicht 124 des Aufprallobjektes. Mit steigender Applikationszeit erfolgt eine stete Gewichtszunahme, wobei in verschiedenen Zeiträumen ΔT mit einem unterschiedlichen Volumenstrom appliziert wird. Der Volumenstromverlauf 126 ergibt sich letztendlich aus der Gewichtszunahme pro Zeiteinheit beziehungsweise aus der mathematischen Ableitung des Gewichtsverlaufes 122.

Bezugszeichenliste

| | |
|---|---|
| 10 | exemplarisches System zur Ermittlung von Prozessparametern |
| 12 | Dosiervorrichtung |
| 14 | Applikatonsdüse |
| 16 | Hochdruckschlauch |
| 18 | Fluidventil |
| 20 | Aufprallobjekt |
| 22 | Waage |
| 24 | exemplarische Rechenvorrichtung |
| 26 | Industrieroboter |
| 28 | Kommunikationsleitung |
| 30 | Fluidreservoir |
| 32 | Antriebseinheit |
| 34 | Dosierantrieb |
| 36 | Getriebe |
| 38 | Spindel |
| 39 | Dosierzylinder |
| 40 | Teil eines exemplarischen Systems zur Ermittlung von Prozessparametern |
| 42 | Industrieroboter |
| 44 | Applikatonsdüse |
| 46 | Fluidstrahl |
| 48 | Aufprallobjekt |
| 50 | Biegebalken (gerade) |
| 52 | Biegebalken (gebogen) |
| 54 | Tragegestell |
| 56 | Vibrationsdämpfer |
| 58 | Standfläche |
| 60 | exemplarisches Applikationsergebnis bei variierendem Volumenstromverlauf |
| 62 | Fluidstrahlbreitenverlauf |
| 64 | Fluidstrahlbreite vor erstem Schaltzeitpunkt |
| 66 | erster Schaltzeitpunkt |
| 68 | Übergangszeitraum nach erstem Schaltzeitpunkt |
| 70 | Zeitpunkt Beginns des stationären Zeitraums nach erstem Schaltzeitpunkt |
| 72 | Fluidstrahlbreite im stationären Zeitraum |
| 74 | zweiter Schaltzeitpunkt |
| 76 | Übergangszeitraum nach zweitem Schaltzeitpunkt |
| 78 | Zeitpunkt Beginns des stationären Zeitraums nach zweitem Schaltzeitpunkt |
| 80 | exemplarisches Regelschema mit Übertragungsfunktion |
| 82 | Regler |
| 84 | Übertragungsfunktion |
| 86 | Applikationssystem |
| 88 | Sollgrößenvorgabe (Volumenstrom) |
| 90 | Abweichung von Sollgröße (Volumenstrom) |
| 92 | Stellgröße (Eingangsparameter) |
| 94 | geschätzte Istgröße (Volumenstrom) |
| 96 | reale Istgröße (Volumenstrom) |
| 98 | Messgröße |
| 100 | exemplarisches Steuerschema mit Shootfilter |
| 102 | Shootfilter |
| 104 | Applikationssystem |
| 106 | Sollgrößenvorgabe (Volumenstrom) |
| 108 | Stellgröße (Eingangsparameter) |

110    reale Istgröße (Volumenstrom)
112    Prozessparameter
120    exemplarischer Gewichtsverlauf und zugehöriger Volumenstromverlauf
122    Gewichtsverlauf
124    Gewicht Aufprallobjekt
126    Volumenstromverlauf

**Patentansprüche**

1. System (10) zur Ermittlung von Prozessparametern (112) für die Spritzapplikation von viskosen Fluiden, umfassend

• ein mittels Vorgabe von Eingangsparametern (92, 108) ansteuerbares Applikationssystem (86, 104) für ein viskoses Fluid mit wenigstens den Komponenten Dosiervorrichtung (12), Fluidventil (18) und Applikatonsdüse (14, 44),
• wobei das dynamische Verhalten des Applikationssystems (86, 104) hinsichtlich des Volumenstromverlaufs (126) des viskosen Fluids beim Applizieren unter anderem auch von vorgebbaren regelungstechnischen Prozessparametern (112) abhängig ist,
• ein Aufprallobjekt (20, 48) zum Bespritzen mit dem viskosen Fluid durch das Applikationssystem (86, 104),
• eine Waage (22) zur kontinuierlichen Bestimmung des Gewichtes des Aufprallobjektes (20,48) inklusive des auf diesem applizierten viskosen Fluids, wobei die Waage (22) dafür vorgesehen ist, in Form von kontinuierlichen Messdaten einen Gewichtsverlauf (122) bereitzustellen,
• wenigstens eine Rechenvorrichtung (24), welche dafür vorgesehen ist,

• das Applikationssystem (86, 104) mit einer Sequenz veränderter Eingangsparameter (92, 108) anzusteuern,
• aus dem Gewichtsverlauf (122) einen zeitlich zu der jeweiligen Änderung der Eingangsparameter (92, 108) korrelierenden Volumenstromverlauf (126) des applizierten Fluids zu ermitteln,
• anhand der Eingangsparameter (92, 108), dem ermittelten Volumenstromverlauf (126) sowie wenigstens einem vorgegebenen dynamischen Volumenstromverlauf (126) hinsichtlich wenigstens einer vorgebbaren Optimierungsgröße regelungstechnisch optimierte Prozessparameter (112) für das Applikationssystem (86, 104) zu ermitteln und bereitzustellen,

**dadurch gekennzeichnet, dass**
das Aufprallobjekt (20,48) eine senkrecht ausgerichtete Platte ist.

2. System nach Anspruch 1, **dadurch gekennzeichnet, dass** die Waage (22) einen Biegebalken (50, 52) umfasst.

3. System nach Anspruch 1 oder 2, **dadurch gekennzeichnet, dass** die Waage (22) dafür vorgesehen ist, mit einer Frequenz von 100Hz oder höher Messdaten bereitzustellen.

4. System nach einem der vorherigen Ansprüche, **dadurch gekennzeichnet, dass** zumindest die Applikatonsdüse (14, 44) des Applikationssystems auf einem Industrieroboter (26, 42) angeordnet ist.

5. Verfahren zur Ermittlung und Anwendung von Prozessparametern (112) für die Spritzapplikation von viskosen Fluiden mit einem System (10) nach einem der Ansprüche 1 bis 4, umfassend folgende Schritte

• Bereitstellen eines Übertragungsfunktionsmodells zur Nachbildung des dynamischen Verhaltens des Applikationssystems (86, 104),
• Ansteuerung des Applikationssystems (86, 104) gemäß einer Sequenz veränderter Eingangsparameter (92, 108), wobei eine Applikation eines viskosen Fluids auf das Aufprallobjekt (20,48) erfolgt,
• kontinuierliche Gewichtsbestimmung des Aufprallobjektes (20,48) inklusive des auf dieser applizierten viskosen Fluids,
• kontinuierliche Ermittlung des Volumenstromverlaufes (126) des applizierten Fluids anhand der Gewichtszunahme in Abhängigkeit der Zeit,
• Bestimmung geeigneter Parameter für das Übertragungsfunktionsmodell anhand wenigstens der vorgegebenen Eingangsparameter (92, 108) als Eingangsgrößen und des zugehörigen Volumenstromverlaufs (126) als Ausgangsgröße, so dass eine Übertragungsfunktion (84) definiert ist,

• Vorgabe eines gewünschten dynamischen Volumenstromverlaufs (126),
• Ermittlung von hinsichtlich wenigstens eines vorgebbaren Optimierungskriteriums regelungstechnisch optimierten Prozessparametern (112) anhand der Übertragungsfunktion (84) und des gewünschten dynamischen Volumenstromverlaufs (126),
• Übertragung der ermittelten Prozessparameter in dieses oder ein baugleiches ansteuerbares Applikationssystem (86, 104).

6.  Verfahren nach Anspruch 5 **dadurch gekennzeichnet, dass** dieses oder ein baugleiches ansteuerbares Applikationssystem unter Verwendung der ermittelten Prozessparameter (112) ein viskoses Fluid appliziert.

7.  Verfahren zur Regelung der Spritzapplikation eines mittels Vorgabe von Eingangsparametern (92, 108) ansteuerbaren Applikationssystems (86, 104) für ein viskoses Fluid mit wenigstens den Komponenten Dosiervorrichtung (12), Fluidventil (18) und Applikatonsdüse (14), **gekennzeichnet durch** folgende Schritte:

• Bereitstellen einer Übertragungsfunktion (84) zur Nachbildung des dynamischen Verhaltens des Applikationssystems (86, 104), wobei die Übertragungsfunktion (84) die vorgegebenen Eingangsparameter (92, 108) als Eingangsgrößen und den zugehörigen Volumenstromverlauf (126) als Ausgangsgröße umfasst,
• Applikation eines viskosen Fluids **durch** das Applikationssystem (86, 104) unter Vorgabe von Eingangsparametern (92, 108) und einem zugehörigen zu erzielenden idealen Volumenstromverlauf (126),
• kontinuierliches Schätzen des realen Volumenstromverlaufs (126) mittels wenigstens der Übertragungsfunktion (84),

Regelung der Eingangsparameter (92, 108) derart, dass während der Applikation der geschätzte Volumenstromverlauf (126) dem zu erzielenden idealen Volumenstromverlauf (126) möglichst nahe kommt.

## Claims

1.  System (10) for determining process parameters (112) for the spray application of viscous fluids, comprising

• an application system (86, 104), which can be actuated by predefining input parameters (92, 108), for a viscous fluid having at least the components of metering device (12), fluid valve (18) and application nozzle (14, 44),
• wherein the dynamic behaviour of the application system (86, 104) is dependent, with respect to the volume flow profile (126) of the viscous fluid during the application, also on, inter alia, predefinable control process parameters (112),
• an impacted object (20, 48) to be sprayed with the viscous fluid by the application system (86, 104),
• a balance (22) for continuously determining the weight of the impacted object (20, 48), including the viscous fluid applied thereto, wherein the balance (22) is provided to make available a weight profile (122) in the form of continuous measurement data,
• at least one computing device (24) which is provided

• for actuating the application system (86, 104) with a sequence of changed input parameters (92, 108),
• for determining from the weight profile (122) a volume flow profile (126), correlating chronologically with the respective change in the input parameters (92, 108), of the applied fluid,
• for determining and making available, on the basis of the input parameters (92, 108), the determined volume flow profile (126) as well as at least one predefined dynamic volume flow profile (126), process parameters (112), optimized in terms of control with respect to at least one predefinable optimization variable, for the application system (86, 104),

**characterized in that** the impacted object (20, 48) is a vertically oriented plate.

2.  System according to Claim 1, **characterized in that** the balance (22) comprises a bending bar (50, 52).

3.  System according to Claim 1 or 2, **characterized in that** the balance (22) is provided for making available measurement data with a frequency of 100 Hz or higher.

4.  System according to one of the preceding claims, **characterized in that** at least the application nozzle (14, 44) of the application system is arranged on an industrial robot (26, 42).

**5.** Method for determining and applying process parameters (112) for the spray application of viscous fluids with a system (10) according to one of Claims 1 to 4, comprising the following steps

• making available a transmission function model for modelling the dynamic behaviour of the application system (86, 104),
• actuating the application system (86, 104) according to a sequence of changed input parameters (92, 108), wherein a viscous fluid is applied to the impacted object (20, 48),
• continuously determining the weight of the impacted object (20, 48) including the viscous fluid applied thereto,
• continuously determining the volume flow profile (126) of the applied fluid on the basis of the increase in weight as a function of time,
• determining suitable parameters for the transmission function model on the basis of at least the predefined input parameters (92, 108) as input variables and the associated volume flow profile (126) as an output variable, with the result that a transmission function (84) is defined,
• predefining a desired dynamic volume flow profile (126),
• determining process parameters (112), which are optimized in terms of control with respect to at least one predefinable optimization criterion, on the basis of the transmission function (84) and the desired dynamic volume flow profile (126),
• transmitting the determined process parameters into this or into a structurally identical, actuable application system (86, 104).

**6.** Method according to Claim 5, **characterized in that** this or a structurally identical, actuable application system applies a viscous fluid using the determined process parameters (112).

**7.** Method for controlling the spray application of an application system (86, 104), which can be actuated by predefining input parameters (92, 108), for a viscous fluid having at least the components of metering device (12), fluid valve (18) and application nozzle (14), **characterized by** the following steps:

• making available a transmission function (84) for modelling the dynamic behaviour of the application system (86, 104), wherein the transmission function (84) comprises the predefined input parameters (92, 108) as input variables and the associated volume flow profile (126) as an output variable,
• applying a viscous fluid by means of the application system (86, 104) while predefining input parameters (92, 108) and an associated ideal volume flow profile (126) which is to be achieved,
• continuously estimating the real volume flow profile (126) by means of at least the transmission function (84),

controlling the input parameters (92, 108) in such a way that, during the application, the estimated volume flow profile (126) is as close as possible to the ideal volume flow profile (126) to be achieved.

**Revendications**

**1.** Système (10) de détermination de paramètres de processus (112) pour l'application par pulvérisation de fluides visqueux, comprenant

• un système d'application (86, 104) pour un fluide visqueux pouvant être amorcé par la prédétermination de paramètres d'entrée (92, 108), avec au moins les composants dispositif de dosage (12), soupape à fluide (18) et buse d'application (14, 44),
• dans lequel le comportement dynamique du système d'application (86, 104) en ce qui concerne la courbe du courant volumique (126) du fluide visqueux lors de l'application dépend entre autres aussi de paramètres de processus techniques de régulation prévisibles (112),
• un objet cible (20, 48) à revêtir avec le fluide visqueux au moyen du système d'application (86, 104),
• une balance (22) pour la détermination continue du poids de l'objet cible (20, 48) y compris du fluide visqueux appliqué sur celui-ci, dans lequel la balance (22) est prévue pour préparer la courbe de poids (122) sous la forme de données de mesure continues,
• au moins un dispositif de calcul (24), qui est prévu pour

• amorcer le système d'application (86, 104) avec une séquence de paramètres d'entrée modifiés (92, 108),
• déterminer à partir de la courbe de poids (122) une courbe de courant volumique (126) du fluide appliqué se corrélant temporellement à la variation respective des paramètres d'entrée (92, 108),
• déterminer et fournir, à l'aide des paramètres d'entrée (92, 108), de la courbe de courant volumique déterminée (126) ainsi que d'au moins une courbe de courant volumique dynamique prédéterminée (126), des paramètres de processus techniques de régulation (112) optimisés en ce qui concerne au moins une grandeur d'optimisation prévisible pour le système d'application (86, 104),

**caractérisé en ce que** l'objet cible (20, 48) est une plaque orientée verticalement.

2. Système selon la revendication 1, **caractérisé en ce que** la balance (22) est une poutre de flexion (50, 52).

3. Système selon la revendication 1 ou 2, **caractérisé en ce que** la balance (22) est prévue pour fournir des données de mesure avec une fréquence de 100 Hz ou plus.

4. Système selon l'une quelconque des revendications précédentes, **caractérisé en ce qu'**au moins la buse d'application (14, 44) du système d'application est disposée sur un robot industriel (26, 42).

5. Procédé de détermination et d'utilisation de paramètres de processus (112) pour l'application par pulvérisation de fluides visqueux avec un système (10) selon l'une quelconque des revendications 1 à 4, comprenant les étapes suivantes:

• préparer un modèle de fonction de transfert pour la simulation du comportement dynamique du système d'application (86, 104),
• amorcer le système d'application (86, 104) selon une séquence de paramètres d'entrée modifiés (92, 108), dans lequel on effectue une application d'un fluide visqueux sur l'objet cible (20, 48),
• déterminer en continu le poids de l'objet cible (20, 48) y compris du fluide visqueux appliqué sur celui-ci,
• déterminer en continu la courbe de courant volumique (126) du fluide appliqué à l'aide de l'augmentation de poids en fonction du temps,
• déterminer des paramètres appropriés pour le modèle de fonction de transfert à l'aide d'au moins les paramètres d'entrée prédéterminés (92, 108) comme grandeurs d'entrée et de la courbe de courant volumique correspondante (126) comme grandeur de sortie, de telle manière qu'une fonction de transfert (84) soit définie,
• prédéterminer une courbe de courant volumique dynamique désirée (126),
• déterminer des paramètres de processus techniques de régulation (112) optimisés en ce qui concerne au moins un critère d'optimisation prévisible à l'aide de la fonction de transfert (84) et de la courbe de courant volumique dynamique désirée (126),
• transférer les paramètres de processus déterminés dans ce système d'application ou dans un système de même structure pouvant être amorcé (86, 104).

6. Procédé selon la revendication 5, **caractérisé en ce que** ce système d'application ou un système de même structure pouvant être amorcé applique un fluide visqueux en utilisant les paramètres de processus déterminés (112).

7. Procédé de régulation de l'application par pulvérisation d'un système d'application (86, 104) pour un fluide visqueux pouvant être amorcé au moyen de la prédétermination de paramètres d'entrée (92, 108), avec au moins les composants dispositif de dosage (12), soupape à fluide (18) et buse d'application (14), **caractérisé par** les étapes suivantes:

• préparation d'une fonction de transfert (84) pour la simulation du comportement dynamique du système d'application (86, 104), dans lequel la fonction de transfert (84) comprend les paramètres d'entrée prédéterminés (92, 108) comme grandeurs d'entrée et la courbe de courant volumique correspondante (126) comme grandeur de sortie,
• application d'un fluide visqueux par le système d'application (86, 104) avec prédétermination de paramètres d'entrée (92, 108) et d'une courbe de courant volumique idéale correspondante à obtenir (126),
• évaluation continue de la courbe de courant volumique réelle (126) au moyen d'au moins la fonction de transfert (84),

régulation des paramètres d'entrée (92, 108) de telle manière que pendant l'application la courbe de courant volumique évaluée (126) soit la plus proche possible de la courbe de courant volumique idéale à obtenir (126).

Fig. 1

Fig. 2

Fig. 3

Fig. 4

Fig. 5

Fig. 6

120

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 2007231427 A1